# EUROPÄISCHE PATENTSCHRIFT

(11) **EP 3 003 208 B1**
(45) Veröffentlichungstag und Bekanntmachung des Hinweises auf die Patenterteilung: **06.11.2019**
(21) Anmeldenummer: 14727757.8
(22) Anmeldetag: 21.05.2014
(51) Int. Cl.: A61C 13/01, A61C 13/00

(54) **PROTHESENVORKÖRPER ZUR HERSTELLUNG EINES DENTALEN PROTHESENKÖRPERS**
PROSTHESIS PRE-FORM FOR PRODUCING A PROSTHESIS BODY
EBAUCHE DE PROTHÈSE POUR LA FABRICATION D'UN CORPS DE PROTHÈSE

(30) Priorität: 27.05.2013 EP 13169349
(43) Veröffentlichungstag der Anmeldung: 13.04.2016
(73) Patentinhaber: VITA-ZAHNFABRIK H. Rauter GmbH & Co. KG, 79713 Bad Säckingen (DE)
(72) Erfinder: RAUH, Wolfgang, 79713 Bad Säckingen (DE); CHRISTEN, Urban, 79713 Bad Säckingen (DE); EGLE, Franz, 79713 Bad Säckingen (DE); KERSCHENSTEINER, Eva, 79713 Bad Säckingen (DE)
(74) Vertreter: dompatent von Kreisler Selting Werner - Partnerschaft von Patent- und Rechtsanwälten mbB
(86) Internationale Anmeldenummer: PCT/EP2014/060478
(87) Internationale Veröffentlichungsnummer: WO 2014/191286

(56) Entgegenhaltungen:
- WO-A1-2011/124474
- WO-A1-2013/117540
- DE-A1-102007 014 985
- DE-A1-102011 118 320
- DE-U1-202012 100 359
- US-A- 5 151 044
- US-A1- 2011 268 525
- US-A1- 2012 107 771
- US-A1- 2013 101 962

## Beschreibung

Die Erfindung betrifft einen Prothesenvorkörper zur Herstellung eines dentalen Prothesenkörpers, wobei der Prothesenkörper zur Aufnahme von Zähnen dient. Bei den Prothesenkörpern handelt es sich um herausnehmbaren Zahnersatz, insbesondere in Form von Totalprothesen oder Teilprothesen.

Prothesenkörper, in denen die einzelnen Zähne fixiert werden, werden heute patientenindividuell von Hand gefertigt. Hierzu wird auf Basis eines Kieferabdrucks üblicherweise ein Polymermaterial in eine entsprechende Form eingebracht. Es ist somit erforderlich patientenindividuelle Formen für den Unter- und den Oberkiefer herzustellen, um jeweils für den Unterkiefer und den Oberkiefer einen Prothesenkörper herstellen zu können. Dies stellt ein äußerst zeit- und kostenintensives Verfahren dar.

US 2013/0101962 A1 beschreibt ein Verfahren bei dem aus einer kreiszylindrischen Ronde zunächst Ausnehmungen ausgefräst werden, welche sodann mit einer härtbaren Flüssigkeit eingefüllt wird, um hieraus die Zähne der Prothese zu formen.

US 2012/0107771 A1 beschreibt eine Teilprothese bei der auf einem flexiblen Prothesenkörper künstliche Zähne aufgeklebt werden. Dabei wird der Prothesenkörper ausgeschnitten aus einer Schicht eines thermoplastischen Gummis.

Aufgabe der Erfindung ist eine kostengünstigere Herstellung derartiger Prothesenkörper.

Die Lösung der Aufgabe erfolgt erfindungsgemäß durch einen Prothesenvorkörper zur Herstellung eines Prothesenkörpers mit den Merkmalen des Anspruchs 1.

Vorüberlegung der Erfindung ist es, Prothesenkörper aus einem Prothesenvorkörper durch materialabtragende Verfahren insbesondere Fräsen, herzustellen. Zunächst wäre dies aus bspw. kreiszylindrischen Körpern, sogenannten Ronden möglich. Das Verwenden derartiger Ronden hat den Vorteil, dass diese mit einer sehr hohen Materialqualität, die insbesondere über das gesamte Volumen der Ronde gleichbleibend ist, hergestellt werden können. Insbesondere können derartige Ronden mit einer konstanten Dichte und vorzugsweise auch restpolymerfrei hergestellt werden. Andererseits weist das Verwenden von kreiszylindrisch ausgebildeten Ronden den Nachteil auf, dass ein großer Materialabtrag erforderlich ist. Dies hat ferner auch einen hohen Werkzeugverschleiß, sowie lange Herstellungszeiten zur Folge.

Erfindungsgemäß wird daher anstatt einer kreiszylindrischen Ronde ein Prothesenvorkörper vorgeschlagen, der an die Form des herzustellenden Prothesenkörpers angenähert ist. Insbesondere ist der Prothesenvorkörper derart an den herzustellenden Prothesenkörper angenähert, dass eine Materialeinsparung von mehr als 20%, vorzugsweise mehr als 30%, insbesondere mehr als 40% und besonders bevorzugt von mehr als 50% erzielt wird. Besonders hohe Materialeinsparungen von vorzugsweise mehr als 50%, insbesondere sogar mehr als 55% können bei Prothesenvorkörpern für den Unterkiefer erzielt werden, da ein am Gaumen anliegender Bereich nicht ausgearbeitet wird. Die vorstehend angegebenen Materialeinsparungen verstehen sich im Vergleich zu einer herkömmlichen kreiszylindrischen Ronde. Eine derartige herkömmliche kreiszylindrische Ronde weist keine Vertiefung und/ oder Ausnehmungen auf. Es handelt sich um einen kreiszylindrischen Vollkörper. Die erfindungsgemäß bevorzugte Materialeinsparung kann beispielsweise durch Einpressen von Vertiefungen im Prothesenvorkörper erfolgen. Dies hat den Vorteil, dass bei einer späteren materialabtragenden Bearbeitung weniger Material abgetragen werden muss. Auch kann die Herstellung der entsprechenden erfindungsgemäßen Prothesenvorkörper mit Hilfe geeigneter Formen erfolgen, so dass hierdurch eine Materialeinsparung möglich ist. Beispielsweise weist eine Standardronde ein Materialvolumen von ca. 247cm³ auf. Ein erfindungsgemäßer Prothesenvorkörper für einen Oberkiefer kann ein Materialvolumen von ca. 138cm³ aufweisen, sodass eine Materialeinsparung von ca. 44% erzielt werden kann. Dieser Vorkörper für einen Unterkiefer gemäß der Erfindung weist vorzugsweise ein Volumen von nur ca. 103cm³ auf, sodass sogar eine Materialeinsparung von ca. 58% gegenüber einer Standard-Ronde erzielt werden kann.

Erfindungsgemäß weist der Prothesenvorkörper einen Hauptkörper auf, der nach der Bearbeitung den individualisierten Prothesenkörper ausbildet. Des Weiteren ist es bevorzugt, dass der Prothesenvorkörper zusätzlich zu dem Hauptkörper einen Haltekörper aufweist. Der Haltekörper dient insbesondere zur Aufnahme des Prothesenvorkörpers in der Bearbeitungsmaschine. Hierbei ist es besonders bevorzugt, dass der Haltekörper den Hauptkörper zumindest teilweise vorzugsweise vollständig, umgibt. Vorzugsweise ist der Haltekörper ringförmig ausgebildet und umgibt den Hauptkörper.

Zur Ausbildung eines Prothesenkörpers für eine Unterkieferprothese weist der Hauptkörper eine im Wesentlichen U-förmige Form auf. Zur Herstellung eines Prothesenkörpers für einen Oberkiefer ist die im Wesentlichen U-förmige Form um ein dazwischenliegendes Gaumenanlageelement ergänzt.

Bei einer weiteren bevorzugten Ausführungsform weist der erfindungsgemäße Prothesenvorkörper ein Materialvolumen von weniger als 200 cm³, insbesondere weniger als 180cm³, vorzugsweise weniger als 150cm³ und besonders bevorzugt weniger als 125cm³ auf.

Der Prothesenvorkörper ist vorzugsweise aus Polyamid, Polyacrylat (wie beispielsweise Polymethylmethacrylat), Polycarbonat, Polyepoxid und/oder Polyetherketone (beispielsweise PEEK und PAEK), alle mit oder ohne Füllstoffen, hergestellt.

Die Herstellung des Prothesenkörpers, in den die Zähne eingesetzt werden, erfolgt vorzugsweise durch Materialabtrag, wobei dies insbesondere durch Fräsen und insbesondere durch CAD/CAM-Fräsverfahren erfolgt. Eine manuelle Bearbeitung ist nicht oder allenfalls in Form einer geringfügigen Nachbearbeitung erforderlich.

Vorzugsweise weist der Prothesenvorkörper eine kreiszylindrische Grundform auf, wobei an zumindest einer Stirnseite zur Ausbildung der angenäherten Form mindestens eine Ausnehmung, Vertiefung, Einkerbung oder dgl. vorgesehen ist. Der Prothesenvorkörper kann beispielsweise anstelle einer kreisförmigen Grundfläche auch eine mehreckige Grundfläche aufweisen. Die Ausgestaltung der äußeren Mantelfläche der Grundform ist insbesondere von dem Handling durch die Bearbeitungsmaschinen abhängig. Insbesondere kann die äußere Mantelseite der Grundform derart ausgebildet sein, dass eine einfache und lagegenaue Aufnahme des Prothesenvorkörpers in einer

Bearbeitungsmaschine wie einer Fräsmaschine möglich ist. Hierzu können dann an der Mantelfläche beispielsweis auch Vorsprünge, Einkerbungen, Ausnehmungen o.dgl. zur Justage in der Werkstückaufnahme vorgesehen sein.

Bei einer weiteren bevorzugten Ausführungsform kann der Prothesenvorkörper auch derart ausgebildet sein, dass derjenige den Hauptkörper ausbildende Bereich erhaben ist und mit einem scheibenförmigen Element verbunden ist. Das den Haltekörper ausbildende scheibenförmige Element kann hierbei den Hauptkörper vollständig oder teilweise umgeben. Durch Ausgestaltung des Haltekörpers als scheibenförmiges Element kann eine zusätzliche Materialersparnis erzielt werden, da das scheibenförmige Element eine geringere Dicke als ein ringförmig ausgebildeter Haltekörper aufweist. Der Haltekörper kann somit vollständig oder teilweise eine geringere Höhe bzw. Dicke aufweisen als der Hauptkörper, der nach der Bearbeitung den individualisierten Prothesenkörper ausbildet.

Bei einer weiteren bevorzugten Ausführungsform ist der Hauptkörper mit dem insbesondere ringförmig oder scheibenförmig ausgebildeten Haltekörper über Stege verbunden. Dies hat den Vorteil, dass der Hauptkörper zur Herstellung des Prothesenkörpers für das Bearbeitungswerkzeug gut zugänglich ist und insofern eine vereinfachte Bearbeitung auch von Seitenflächen des Prothesenkörpers erfolgen kann. Aufgrund der Verbindung zwischen dem

Hauptkörper und dem Haltekörper über Stege entstehen zwischen den Stegen Durchgangsöffnungen, so dass insbesondere in diesen Bereichen auf einfache Weise ein Bearbeiten von Seitenflächen des Hautkörpers zur Herstellung des Prothesenkörpers erfolgen kann.

Besonders bevorzugt ist es unterschiedliche Prothesenvorkörper vorzusehen. Insbesondere können unterschiedliche Prothesenvorkörper für die Herstellung eines Prothesenkörpers für den Oberkiefer und den Unterkiefer vorgesehen sein. Auch sind unterschiedliche Größen für unterschiedliche Kiefergrößen möglich. Insbesondere ist es insofern möglich eine Mehrzahl an unterschiedlichen, auf häufig auftretende Randbedingungen abgestimmte Prothesenvorkörper vorzuhalten, so dass ein den anatomischen Anforderungen des Patienten möglichst nahekommender Prothesenvorkörper ausgewählt werden kann. Dies hat den Vorteil, dass eine geringe Bearbeitung erfolgen muss, die somit geringere Kosten verursacht und ferner die Wartezeiten von Patienten verringert. Es ist hierbei insbesondere bevorzugt, Patientengruppen zu definieren, für die sodann jeweils ein Prothesenvorkörper vorgesehen ist.

Die Ausgestaltung des Haltekörpers kann in bevorzugter Ausführungsform nicht nur an die Bearbeitungsmaschine bzw. die Werkstückaufnahme der Bearbeitungsmaschine angepasst sein, sondern insbesondere auch in ihrer Höhe variieren. So kann der Haltekörper mindestens die Höhe des Hauptkörpers aufweisen, so dass der Hauptkörper insbesondere vollständig innerhalb des den Hauptkörper ringförmig umgebenden Haltekörpers angeordnet ist. Ebenso kann insbesondere zur Materialeinsparung der

Haltekörper auch flach ausgebildet und somit eine deutlich geringere Höhe als der Hauptkörper aufweisen.

Nachfolgend wird die Erfindung anhand bevorzugter Ausführungsformen unter Bezugnahme auf die anliegenden Zeichnungen näher erläutert.

Es zeigen:
- Fig. 1a: eine erste bevorzugte Ausführungsform eines zumindest teilweise bearbeiteten Prothesenvorkörpers für eine Oberkieferprothese,
- Fig. 1b: eine erste bevorzugte Ausführungsform eines zumindest teilweise bearbeiteten Prothesenvorkörpers für eine Unterkieferprothese,
- Fig. 2a: eine zweite bevorzugte Ausführungsform eines zumindest teilweise bearbeiteten Prothesenvorkörpers für eine Oberkieferprothese,
- Fig. 2b: eine zweite bevorzugte Ausführungsform eines zumindest teilweise bearbeiteten Prothesenvorkörpers für eine Unterkieferprothese,
- Fig. 3a: eine dritte bevorzugte Ausführungsform eines zumindest teilweise bearbeiteten Prothesenvorkörpers für eine Oberkieferprothese,
- Fig. 3b: eine dritte bevorzugte Ausführungsform eines zumindest teilweise bearbeiteten Prothesenvorkörpers für eine Unterkieferprothese,
- Fig. 4a: eine vierte bevorzugte Ausführungsform eines zumindest teilweise bearbeiteten Prothesenvorkörpers für eine Oberkieferprothese,
- Fig. 4b: eine vierte bevorzugte Ausführungsform eines zumindest teilweise bearbeiteten Prothesenvorkörpers für eine Unterkieferprothese,
- Fig. 5a: eine bevorzugte Ausführungsform eines unbearbeiteten erfindungsgemäßen Prothesenvorkörpers für eine Oberkieferprothese und
- Fig. 5b: eine bevorzugte Ausführungsform eines unbearbeiteten erfindungsgemäßen Prothesenvorkörpers für eine Unterkieferprothese.

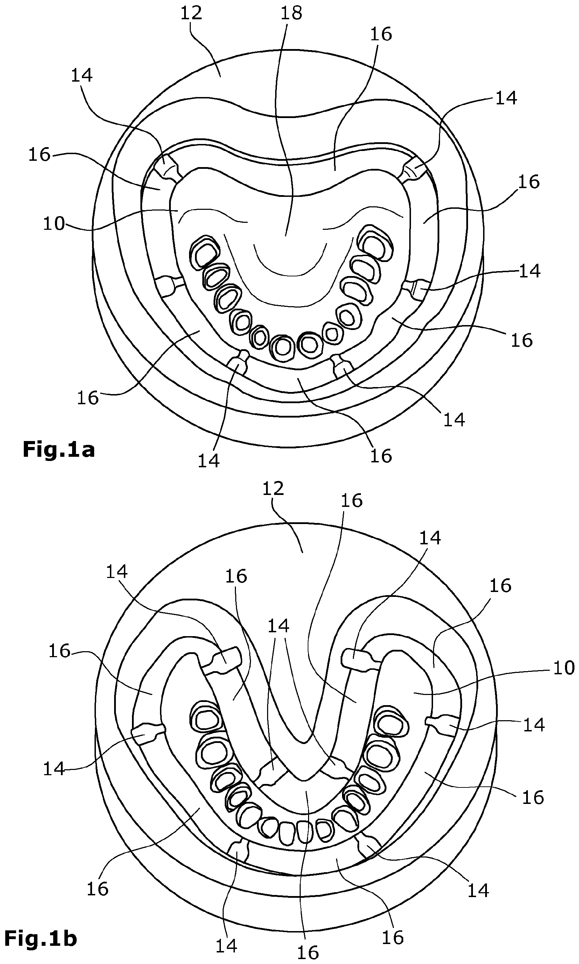

In den dargestellten vier unterschiedlichen bevorzugten Ausführungsformen gemäß Figur 1 - 4, bei denen es sich lediglich um bevorzugte Beispiele von erfindungsgemäßen zumindest teilweise bearbeiteten Prothesenvorkörpern handelt, sind ähnliche oder identische Bestandteile mit denselben Bezugszeichen gekennzeichnet.

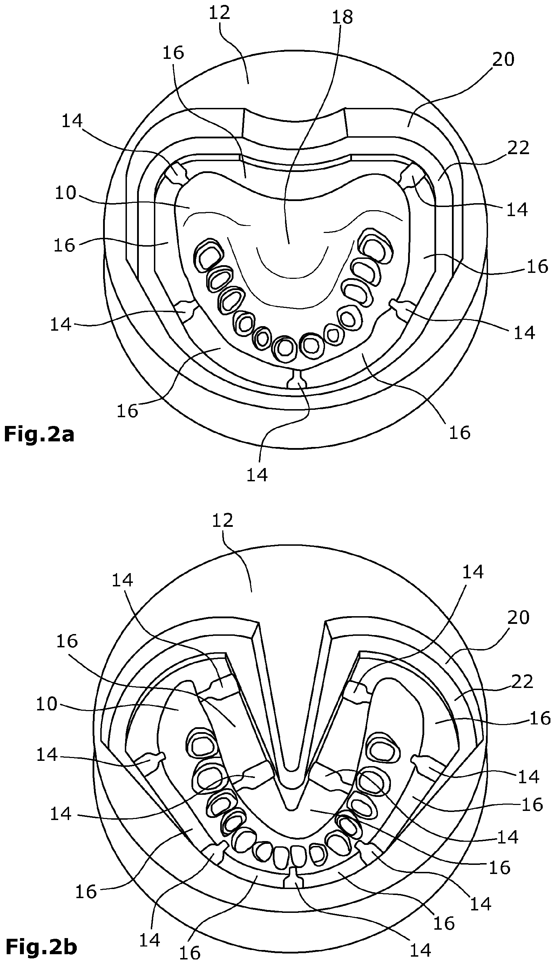

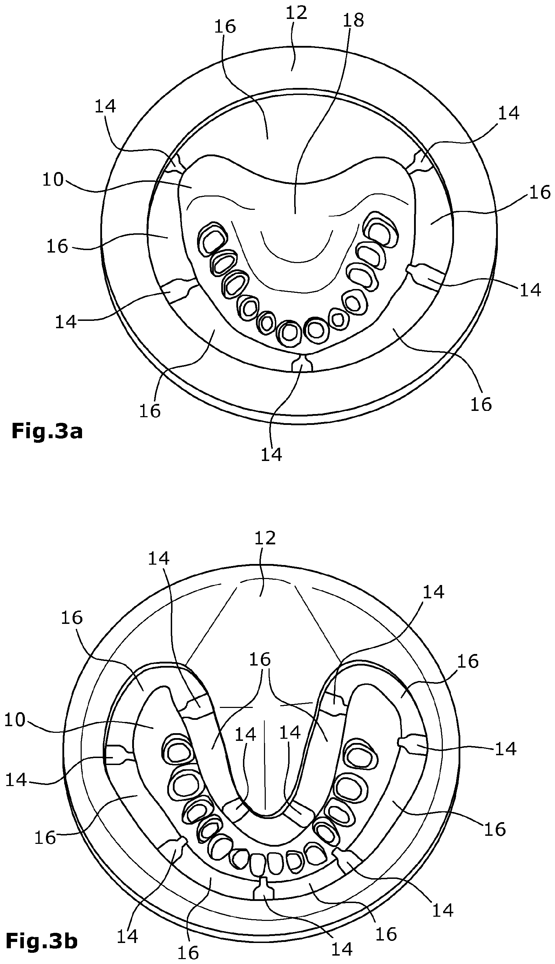

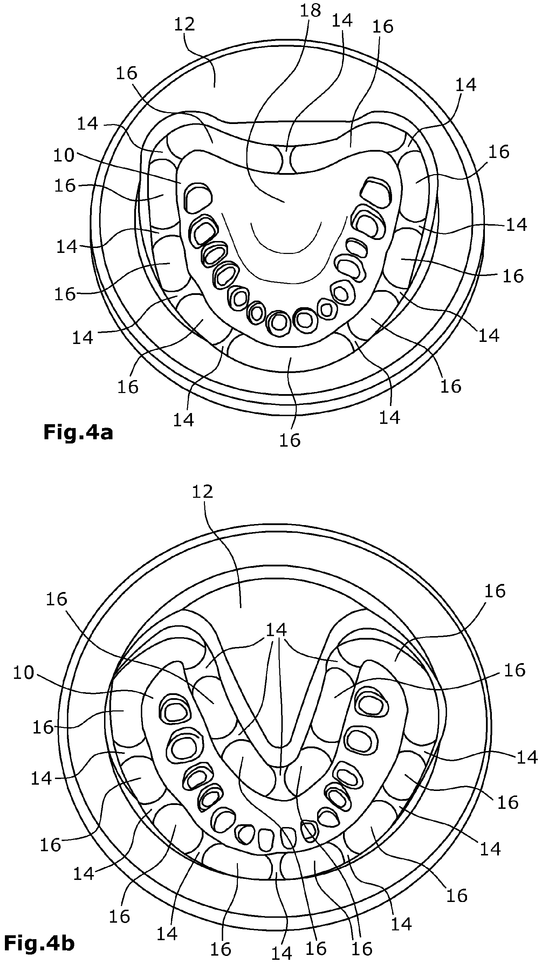

Die dargestellten Ausführungsformen der zumindest teilweise bearbeiteten Prothesenvorkörper weisen jeweils einen Hauptkörper 10, sowie einen den Hauptkörper 10 umgebenden Haltekörper 12 auf. Der Haltekörper 12 ist hierbei jeweils im Wesentlichen ringförmig ausgebildet und weist eine kreisförmige Außenkontur auf. Die Höhe des Haltekörpers 12 entspricht hierbei beispielsweise der Höhe der Hauptkörper 10 oder weist sogar eine größere Höhe auf (Fign. 1 und 2). Ebenso kann der Haltekörper 12 eine geringe, flach ausgestaltete Form und somit eine Höhe aufweisen, die geringer ist als die Höhe der Hauptkörper (Fign. 3 und 4).

Der Haltekörper 12 ist hierbei jeweils über Stege 14 mit dem Hauptkörper 10 verbunden. Hierdurch entstehen durchgehende Zwischenräume 16 zwischen den Stegen 14, so dass Seitenflächen des Hauptkörpers 10 auf einfache Weise, insbesondere mittels Fräswerkzeugen oder anderen spanabhebenden, insbesondere elektrischen und/oder hydraulischen Werkzeugen, bearbeitet werden können.

Durch abtragende Bearbeitung wie bspw. durch Fräsen erfolgt das Herstellen des Prothesenkörpers aus dem Hauptkörper 10.

In dem dargestellten Ausführungsformen sind die Hauptkörper 10 jeweils durch eine den Hauptkörper 10 vollständig umgebende Ausnehmung umgeben, wobei die Ausnehmung durch die Zwischenräume 16 ausgebildet ist.

Die Stege 14 sind in einer bevorzugten Ausführungsform stets derart ausgebildet, dass sich diese ausgehend von dem Haltekörper 12 in Richtung des Hauptkörpers 10 verjüngen. Die Verjüngung kann hierbei auch stufenweise erfolgen. Dies hat den Vorteil, dass die Verbindungsflächen zwischen den Stegen 14 und den Hauptkörpern 10 sehr gering sind. Nach dem Herstellen des Prothesenkörpers aus den Hauptkörpern 10, werden diese durch Trennen der Stege 14 aus dem Prothesenvorkörper herausgeschnitten, wobei sodann in den Bereichen der Verbindungsstellen zwischen den Stegen 14 und den Hauptkörpern 10 eine geringe Nachbearbeitung erfolgt.

Bei den dargestellten Ausführungsformen zur Herstellung der Prothesenkörper für die Oberkiefer (Fig. 1a) ist innerhalb des im Wesentlichen U-förmigen Hauptkörpers 10 ein Gaumenanlageelement 18 ausgebildet.

Zur weiteren Materialeinsparung und um die Zugänglichkeit für das Bearbeitungswerkzeug zu verbessern, weisen die Haltekörper 12 bei der in den Fign 2a und 2b dargestellten Ausführungsformen zusätzlich einen Absatz 20 auf, so dass ein flaches rahmenförmiges Element 22 ausgebildet ist, das sodann mit den Stegen 14 verbunden ist.

Die Stege 14 können wie in den Ausführungsformen der Figuren 1 bis 3 dargestellt im Wesentlichen runde ggf. abgestufte Querschnitte aufweisen, können jedoch auch als flache Stege entsprechend der in Fig. 4 dargestellten Ausführungsform ausgebildet sein.

Die in Fig. 1 dargestellte Ausführungsform weist insbesondere den Vorteil auf, dass der Hauptkörper 10 im Ausgangszustand verbleibt und daher der Aufwand sehr gering ist. Des Weiteren ist bei dieser Ausführungsform vorteilhaft, dass der Hauptkörper 10 durch symmetrische, einfach zu bearbeitende Stege 14 fixiert ist. Da die Stege 14 als einen kreisförmigen Querschnitt aufweisende Pins ausgebildet sind, ist ein einfaches konturtreues Entfernen möglich.

Bei der in der Fig. 2 dargestellten Ausführungsform ist eine symmetrische Kantengeometrie an dem Hauptkörper 12 vorgesehen. Hierdurch ist eine einfache Automatisierung durch Algorithmen möglich. Des Weiteren weist diese Ausführungsform zusätzlich die Vorteile der in Fig. 1 dargestellten Ausführungsform auf.

Bei der besonders bevorzugten in Fig. 3 dargestellten Ausführungsform ist der Hauptkörper 10 in einem reduzierten Haltekörper 12 angeordnet. Des Weiteren weist diese Ausführungsform, insbesondere aufgrund des flachen ringförmig ausgebildeten Haltekörpers 12 einen äußerst geringen Materialeinsatz auf. Hierdurch wird die Fertigungszeit deutlich verringert, da der Spanabtrag äußerst gering ist. Ferner kann hierdurch eine erhebliche Materialeinsparung im Vergleich zu kreiszylindrischen Ronden erzielt werden.

Die in Fig. 4 dargestellte Ausführungsform weist eine vorteilhafte Ausgestaltung der Stege 14 auf. Aufgrund ihrer flachen Ausgestaltung können diese nach der Herstellung auf einfache Weise konturtreu entfernt werden.

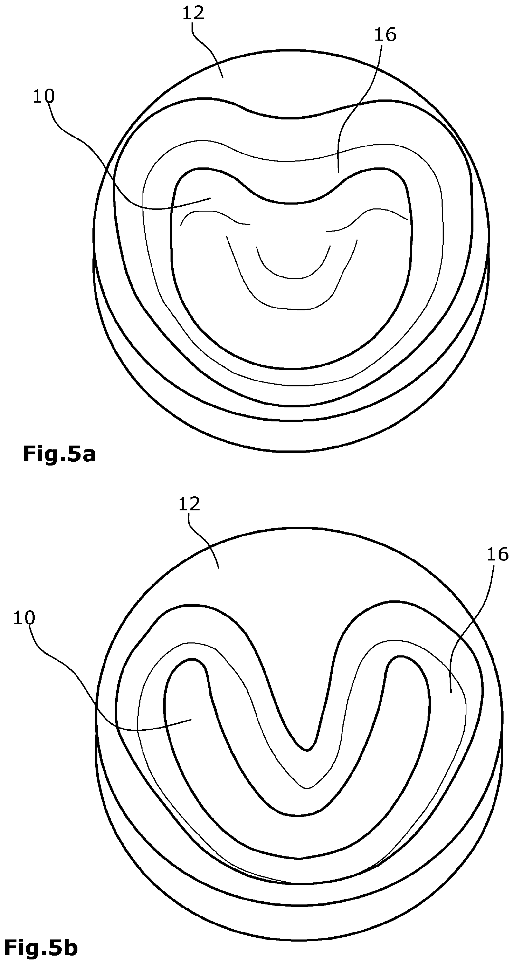

In den Figuren 5a und 5b sind Prothesenvorkörper für eine Oberkieferprothese (Figur 5a) bzw. eine Unterkieferprothese (Figur 5b) gezeigt. Hierbei handelt es sich um erfindungsgemäß ausgestaltete Prothesenvorkörper, die im Unterschied zu den in Figuren 1 - 4 dargestellten Ausführungsformen noch nicht bearbeitet sind. Gegenüber kreiszylindrisch ausgebildeten Ronden besteht somit der erfindungswesentliche Unterschied, dass zur Ausbildung der Prothesenvorkörper 10 Ausnehmungen bzw. Vertiefungen 16 vorgesehen sind. Beispielsweise durch Herausfräsen werden sodann aus den Ausnehmungen 16 Durchbrüche 16 hergestellt, wie sie in den Figuren 1 - 4 sichtbar sind.

Bei allen bevorzugten Ausführungsformen besteht der erfindungswesentliche Vorteil, dass der Hauptkörper 10 bereits sehr große Ähnlichkeit mit dem Fertigteil aufweist und daher kaum Materialverlust notwendig ist. Ein wesentlicher Vorteil der Erfindung besteht somit darin, dass erhebliche Materialeinsparungen erzielt werden können.

## Patentansprüche

1. Dentaler Prothesenvorkörper zur Herstellung eines dentalen Prothesenkörpers zur Aufnahme von Zähnen,
wobei der Prothesenvorkörper Polyamid, Polyacrylat, Polycarbonat, Polyepoxid und/oder Polyetherketone, jeweils mit oder ohne Füllstoffe, aufweist
**dadurch gekennzeichnet, dass**
der Prothesenvorkörper eine der Form des Prothesenkörpers angenäherte Form aufweist, wobei der Prothesenvorkörper einen Hauptkörper (10) aufweist, der nach der Bearbeitung den Prothesenkörper ausbildet und der Hauptkörper (10) von dem Haltekörper (12) zumindest teilweise umgeben ist, wobei der Hauptkörper (10) zur Ausbildung eines Prothesenkörpers für einen Unterkiefer im Wesentlichen U-förmig ausgebildet ist oder der Hauptkörper (10) zur Ausbildung eines Prothesenkörpers für einen Oberkiefer im Wesentlichen U-förmig mit dazwischenliegendem Gaumenanlageelement (18) ausgebildet ist.

2. Dentaler Prothesenvorköper nach Anspruch 1, **dadurch gekennzeichnet, dass** der Prothesenvorkörper derart angenähert ist, dass eine Materialeinsparung von mindestens 20%, insbesondere mindestens 30% gegenüber einem kreiszylindrisch ausgebildeten Prothesenvorkörper erzielt ist.

3. Dentaler Prothesenvorkörper nach Anspruch 2, **dadurch gekennzeichnet, dass** die Materialeinsparung mindestens 40% und besonders bevorzugt mindestens 50% beträgt.

4. Dentaler Prothesenvorkörper nach einem der Ansprüche 1 - 3, **dadurch gekennzeichnet, dass** der Prothesenvorkörper ein Materialvolumen von weniger als 200cm³, insbesondere weniger als 180cm³, vorzugsweise weniger als 150cm³ und besonders bevorzugt weniger als 125cm³ aufweist.

5. Dentaler Prothesenvorkörper nach einem der Ansprüche 1 - 4, **dadurch gekennzeichnet, dass** der Prothesenvorkörper eine kreiszylindrische Grundform aufweist, an dessen zumindest einer Stirnseite zur Ausbildung der angenäherten Form mindestens eine Ausnehmung (16) vorgesehen ist.

6. Dentaler Prothesenvorkörper nach Anspruch 5, **dadurch gekennzeichnet, dass** die Ausnehmung (16) den Hauptkörper (10) insbesondere vollständig umgibt.

7. Dentaler Prothesenvorkörper nach Anspruch 4, **dadurch gekennzeichnet, dass** der Hauptkörper (10) von einem ringförmig ausgebildeten Haltekörper (12) umgeben ist.

8. Dentaler Prothesenvorkörper nach Anspruch 7, **dadurch gekennzeichnet, dass** der Hauptkörper (10) mit dem Haltekörper (12) über Stege (14) verbunden ist.

9. Dentaler Prothesenvorkörper nach einem der Ansprüche 7 oder 8, **dadurch gekennzeichnet, dass** der Haltekörper (12) mindestens die Höhe des Hauptkörpers (10) aufweist.

10. Dentaler Prothesenvorkörper nach einem der Ansprüche 7 bis 9, **dadurch gekennzeichnet, dass** der Haltekörper (12) flach ausgebildet ist und eine geringere Höhe als der Hauptkörper (10) aufweist.

## Claims

1. A dental prosthesis pre-form for producing a dental prosthesis body for accommodating teeth,
wherein the prosthesis pre-form comprises polyamide, polyacrylate, polycarbonate, polyepoxide and/or polyetherketone, each with or without a filler material,
**characterized in that**
the prosthesis pre-form has a shape approximating the shape of the prosthesis body, wherein the protheses pre-form comprises a main body (10) that, after the processing, constitutes the prosthesis body, and the main body (10) is at least partially surrounded by the retaining body (12), wherein the main body (10) is essentially U-shaped for providing a prosthesis body of a mandible, or the main body (10) is essentially U-shaped for providing a prosthesis body for a maxillary with a palate abutment element (18) interposed therebetween.

2. The dental prosthesis pre-form according to claim 1, **characterized in that** the prosthesis pre-form is approximated to such an extent that a material saving of at least 20 %, in particular at least 30 % as compared with a circular-cylindrically configured prosthesis pre-form is achieved.

3. The dental prosthesis pre-form according to claim 2, **characterized in that** the material saving amounts to at least 40 % and particularly preferred to at least 50 %.

4. The dental prosthesis pre-form according to any one of claims 1-3, **characterized in that** the prosthesis pre-form has a material volume of at least less than 200 cm³, in particular less than 180 cm³, preferably less than 150 cm³, and particularly preferred less than 125 cm³.

5. The dental prosthesis pre-form according to any one of claims 1-4, **characterized in that** the prosthesis pre-form has a circular-cylindrical basic form at whose at least one front end at least one recess (16) is provided for providing the approximated shape.

6. The dental prosthesis pre-form according to claim 5, **characterized in that** the recess (16) in particular completely surrounds the main body (10).

7. The dental prosthesis pre-form according to claim 4, **characterized in that** the main body (10) is surrounded by an annular retaining body (12).

8. The dental prosthesis pre-form according to claim 7, **characterized in that** the main body (10) is connected to the retaining body (12) via webs (14).

9. The dental prosthesis pre-form according to any one of claims 7 or 8, **characterized in that** the retaining body (12) is at least as high as the main body (10).

10. The dental prosthesis pre-form according to any one of claims 7 to 9, **characterized in that** the main body (12) is of a flat configuration and has a smaller height than the main body (10).

## Revendications

1. Préforme de prothèse dentaire destinée à la fabrication d'un corps de prothèse dentaire destiné à recevoir des dents,
la préforme présentant du polyamide, du polyacrylate, du polycarbonate, du polyépoxyde et/ou des polyéthercétones, respectivement avec ou sans matières de charge,
**caractérisée en ce que**
la préforme de prothèse présente une forme s'approchant de la forme du corps de prothèse, la préforme de prothèse présentant un corps principal (10) formant le corps de prothèse après usinage et le corps principal (10) étant entouré au moins partiellement par le corps de maintien (12), le corps principal (10) étant réalisé essentiellement en forme de U afin de former un corps de prothèse destiné à une mâchoire inférieure ou le corps principal (10) étant réalisé essentiellement en forme de U avec un élément d'appui au palais (18) intercalé afin de former un corps de prothèse destiné à une mâchoire supérieure.

2. Préforme de prothèse dentaire selon la revendication 1, **caractérisée en ce que** la préforme de prothèse est suffisamment approchante pour permettre une économie de matière d'au moins 20 %, en particulier d'au moins 30 %, par rapport à une préforme de prothèse réalisée sous une forme cylindrique circulaire.

3. Préforme de prothèse dentaire selon la revendication 2, **caractérisée en ce que** l'économie de matière est d'au moins 40 % et de manière particulièrement préférée d'au moins 50 %.

4. Préforme de prothèse dentaire selon l'une quelconque des revendications 1 à 3, **caractérisée en ce que** la préforme de prothèse présente un volume de matière inférieur à 200 cm³, en particulier inférieur à 180 cm³, de manière préférée inférieur à 150 cm³ et de manière particulièrement préférée inférieur à 125 cm³.

5. Préforme de prothèse dentaire selon l'une quelconque des revendications 1 à 4, **caractérisée en ce que** la préforme de prothèse présente une forme de base cylindrique circulaire au niveau d'au moins une face frontale de laquelle un évidement (16) est prévu afin de réaliser la forme approchée .

6. Préforme de prothèse dentaire selon la revendication 5, **caractérisée en ce que** l'évidement (16) entoure en particulier complètement le corps principal (10).

7. Préforme de prothèse dentaire selon la revendication 4, **caractérisée en ce que** le corps principal (10) est entouré d'un corps de maintien (12) réalisé sous une forme annulaire.

8. Préforme de prothèse dentaire selon la revendication 7, **caractérisée en ce que** le corps principal (10) est relié au corps de maintien (12) par l'intermédiaire de barrettes (14).

9. Préforme de prothèse dentaire selon l'une quelconque des revendications 7 ou 8, **caractérisée en ce que** le corps de maintien (12) présente au moins la hauteur du corps principal (10).

10. Préforme de prothèse dentaire selon l'une quelconque des revendications 7 à 9, **caractérisée en ce que** le corps de maintien (12) est réalisé de manière plate et présente une hauteur inférieure à celle du corps principal (10).
